# EUROPÄISCHE PATENTSCHRIFT

(11) **EP 3 587 809 B1**
(45) Veröffentlichungstag und Bekanntmachung des Hinweises auf die Patenterteilung: **09.03.2022**
(21) Anmeldenummer: 18180418.8
(22) Anmeldetag: 28.06.2018
(51) Int. Cl.: F03D 80/80, F03D 15/10

(54) **TRIEBSTRANGANORDNUNG FÜR EINE WINDENERGIEANLAGE**
DRIVETRAIN ASSEMBLY FOR A WIND ENERGY FACILITY
DISPOSITIF DE CHAÎNE CINÉMATIQUE POUR UNE ÉOLIENNE

(43) Veröffentlichungstag der Anmeldung: 01.01.2020
(73) Patentinhaber: Nordex Energy SE & Co. KG, 22419 Hamburg (DE)
(72) Erfinder: Nitzpon, Joachim, 18209 Steffenshagen (DE)
(74) Vertreter: Epping - Hermann - Fischer

(56) Entgegenhaltungen:
- DE-A1-102010 040 654
- DE-A1-102014 214 855
- DE-A1-102015 223 669
- DE-B3-102008 051 274

## Beschreibung

Die Erfindung betrifft eine Triebstranganordnung für eine Windenergieanlage, insbesondere eine Triebstranganordnung zur Kopplung eines Rotors der Windenergieanlage mit einem Generator. Ein Beispiel ist aus DE 10 2015 223669 A1 bekannt.

Triebstranganordnungen für Windenergieanlagen können als Planetengetriebe ausgestaltet sein. Die Triebstranganordnung wird genutzt, um eine langsame Drehbewegung des Rotors in eine schnelle Drehbewegung für den Generator zu übersetzen. Auch mehrstufige Planetengetriebe sind hierfür bekannt.

Weiterhin kann der letzten Planetenradstufe eine Stirnradstufe nachgeschaltet sein. Die Triebstranganordnung wird herkömmlich als eine Einheit in einem Gehäuse realisiert.

Getriebe von Windenergieanlagen unterliegen hohen dynamischen Belastungen über einen langen Zeitraum und weisen eine Vielzahl von unterschiedlichen Maschinenelementen auf. Daher müssen Getriebe von Windenergieanlagen regelmäßig gewartet werden. Dabei kann es erforderlich sein, einzelne Komponenten des Getriebes oder auch ganze Baugruppen auszutauschen. Ein Komponententausch auf der Windenergieanlage setzt ausreichend Platz voraus. Außerdem muss gewährleistet werden, dass die Getriebekomponenten nicht mit Schmutz oder Feuchtigkeit in Berührung kommen. Alternativ kann das Getriebe auch ganz von der Windenergieanlage abgenommen werden. Aufgrund des hohen Gewichtes muss hierfür aber ein externer Kran zur Verfügung stehen, wodurch hohe Kosten verursacht werden.

Es ist wünschenswert, eine Triebstranganordnung für eine Windenergieanlage anzugeben, die einen zuverlässigen Betrieb und eine vereinfachte Wartung/Instandhaltung ermöglicht.

Gemäß der Erfindung weist eine Triebstranganordnung für eine Windenergieanlage eine Stirnradstufe zur Kopplung mit einem Generator auf. Die Triebstranganordnung weist eine erste Planetenradstufe und eine zweite Planetenradstufe auf. Ein erstes Modul der Triebstranganordnung umfasst die erste Planetenradstufe, welche in einem ersten Gehäuse angeordnet ist. Ein zweites Modul der Triebstranganordnung umfasst die zweite Planetenradstufe und die Stirnradstufe, welche in einem zweiten Gehäuse angeordnet sind. Das erste Gehäuse und das zweite Gehäuse sind jeweils als zueinander eigenständige Gehäuse ausgebildet.

Es ist auch möglich, je Modul mehr als eine Planetenradstufe vorzusehen. Beispielsweise enthält das zweite Modul zwei Planetenradstufen. Zwei Planetenstufen im ersten Modul sind auch möglich. Alternativ oder zusätzlich ist es möglich, dass ein zusätzliches drittes Modul mit einer dritten Planetentradstufe zwischen dem ersten und dem zweiten Modul angeordnet ist.

Die Triebstranganordnung ist nicht als eine einzige Einheit mit allen Planetenradstufen ausgebildet. Das erste Modul und das zweite Modul bilden eigenständige Einheiten und können unabhängig voneinander montiert, transportiert, ausgetauscht und gewartet werden. Das erste Modul dient zur Kopplung der Triebstranganordnung mit dem Rotor. Das erste Modul ist ohne das zweite Modul funktionsfähig. Das zweite Modul dient zur Kopplung der Triebstranganordnung mit dem Generator. Das zweite Modul ist ohne das erste Modul funktionsfähig.

Das erste Gehäuse ist ein eigenständiges Gehäuse. Das zweite Gehäuse ist ein eigenständiges Gehäuse. Insbesondere sind das erste Gehäuse und das zweite Gehäuse jeweils unabhängig voneinander herstellbar und montierbar. Gemäß Ausführungsformen weisen das erste Gehäuse und das zweite Gehäuse keine gemeinsamen Bauteile auf, die sowohl Teil des ersten Gehäuses als auch Teil des zweiten Gehäuses sind.

Dadurch sind die beiden Module als separate Module realisierbar. Die Demontage einzelner Module ist möglich. Insbesondere ist das zweite Modul komplett demontierbar. In dem zweiten Modul sind die Stirnradstufe und die zweite Planetenstufe vorgesehen, an denen herkömmlich der größte Anteil von Getriebeschäden auftritt. Durch die eindeutige räumliche Trennung zwischen den Modulen und somit zwischen den Planetenradstufen ist ein Austausch des zweiten Moduls, das aus Erfahrung eine höhere Ausfallwahrscheinlichkeit aufweist, möglich, wobei das erste Modul unverändert in der Windenergieanlage verbleiben kann.

Die beiden Module können unabhängig voneinander transportiert und errichtet werden. Durch die Reduzierung des Gewichts der einzelnen Transport- und Errichtungseinheiten kann beispielsweise das zweite Modul mit dem Bordkran oder einem leichten Hilfskran, der mit dem Bordkran auf dem Maschinenträger montiert wird, aus der Windenergieanlage entnommen werden. Ein externer Kran in Form eines Mobilkranes ist beispielsweise nicht erforderlich.

Gemäß zumindest einer Ausführungsform weist die Triebstranganordnung eine Rotorlagereinheit zum Lagern eines Rotors der Windenergieanlage auf, welche ein Rotorlagergehäuse umfasst. Ein Hohlrad der ersten Planetenradstufe ist mit dem Rotorlagergehäuse starr verbunden, insbesondere verschraubt. Somit ist die erste Planetenradstufe direkt mit der Rotorlagereinheit verbunden. Somit ist es möglich, Kräfte aus der Triebstranganordnung in das Rotorlagergehäuse einzuleiten, insbesondere Axialkräfte und die aus dem Reaktionsmoment am Hohlrad endstehenden Tangentialkräfte.

Gemäß zumindest einer Ausführungsform wird das erste Gehäuse durch das Rotorlagergehäuse, das Hohlrad und das Gehäuse der ersten Planetenradstufe gebildet. Das erste Gehäuse bildet das Gehäuse für die im ersten Modul angeordneten Komponenten.

Gemäß zumindest einer Ausführungsform sind das erste Gehäuse und das zweite Gehäuse jeweils separat gegenüber der Umwelt abgedichtet. Insbesondere sind das erste Gehäuse und das zweite Gehäuse jeweils unabhängig voneinander gegenüber der Umwelt abgedichtet, sodass beispielsweise kein Getriebeöl aus dem Gehäuse austritt, auch wenn die beiden Module nicht miteinander verbunden sind.

Gemäß zumindest einer Ausführungsform weisen das erste Gehäuse und das zweite Gehäuse einen Abstand voneinander auf. Das erste Gehäuse und das zweite Gehäuse sind voneinander beabstandet, beispielsweise um eine Relativbewegung zwischen den beiden Gehäusen zu ermöglichen. Insbesondere weisen das erste Gehäuse und das zweite Gehäuse keine gemeinsame Kontaktfläche unmittelbar miteinander auf. Somit werden insbesondere keine Schwingungen zwischen den beiden Gehäusen übertragen. Insbesondere werden keine für den Menschen hörbaren Geräuschemissionen aus dem zweiten Modul auf das erste Modul übertragen.

Gemäß zumindest einer Ausführungsform weist die Triebstranganordnung ein Entkopplungselement auf. Das Entkopplungselement ist zwischen dem ersten und dem zweiten Gehäuse angeordnet, um das zweite Modul mit dem ersten Modul zu koppeln. Das Entkopplungselement ist insbesondere ein akustisches Entkopplungselement. Das Entkopplungselement ist eingerichtet, das zweite Modul an dem ersten Modul mechanisch abzustützen und dabei akustisch zu entkoppeln. Schwingungen aus dem zweiten Modul werden insbesondere nicht direkt auf das erste Modul übertragen, sondern von dem Entkopplungselement gedämpft. Die Entkopplungselemente sind beispielsweise aus Gummi oder einem anderen Material, das sich zur Kraftübertragung eignet und dabei Schwingungen dämpft. Somit ist das zweite Modul insbesondere akustisch von einem Maschinenträger der Windenergieanlage und von einem Rotorlagerlagergehäuse entkoppelt, das direkt mit dem Maschinenträger verschraubt ist.

Gemäß zumindest einer Ausführungsform weist die Triebstranganordnung eine Sonnenwelle auf. Die Sonnenwelle koppelt das erste Modul und das zweite Modul miteinander. Die Sonnenwelle ist dazu ausgebildet, ein Drehmoment zwischen der ersten und der zweiten Planetenradstufe zu übertragen. Die Sonnenwelle dient insbesondere an einem Ende als Sonnenrad der ersten Planetenradstufe. Am gegenüberliegenden Ende ist die Sonnenwelle beispielsweise mit einem Planetenträger der zweiten Planetenradstufe gekoppelt. Die Sonnenwelle erstreckt sich aus dem ersten Modul heraus und überbrückt den Abstand zwischen dem ersten Gehäuse und dem zweiten Gehäuse, sodass die Sonnenwelle bis in das zweite Modul hinein ragt. Die Sonnenwelle ist somit teilweise außerhalb der Gehäuse der Triebstranganordnung angeordnet.

Gemäß zumindest einer Ausführungsform ist die Sonnenwelle mittels einer Steckverbindung mit dem Planetenträger der zweiten Planetenradstufe verbunden. Die Steckverbindung ermöglicht eine Relativbewegung zwischen der Sonnenwelle und dem Planetenträger. Insbesondere wird hierdurch auch eine Relativbewegung der beiden Module zueinander ermöglicht. Beispielsweise ist die Steckverbindung als ballige Steckverzahnung ausgeführt.

Gemäß zumindest einer Ausführungsform ist die Sonnenwelle starr mit dem Planetenträger der zweiten Planetenradstufe verbunden. Die Sonnenwelle und der Planetenträger sind relativ zueinander fixiert. Beispielsweise sind die Sonnenwelle und der Planetenträger der zweiten Planetenradstufe mittels der Flanschverbindung miteinander verbunden. Alternativ ist auch eine Verbindung mittels eines Spannsatzes möglich oder der Planetenträger der zweiten Planetenradstufe ist auf die Sonnenwelle aufgeschrumpft. Dadurch wird eine verlässliche Kopplung des Planetenträgers mit der Sonnenwelle ermöglicht.

Gemäß zumindest einer Ausführungsform ist die Sonnenwelle mittels einer Steckverbindung mit einem Sonnenrad der ersten Planetenradstufe verbunden. Die Sonnenwelle weist somit an beiden Enden eine Steckverzahnung auf.

Gemäß zumindest einer Ausführungsform ist die Sonnenwelle mittels eines Lagers an dem ersten Gehäuse abgestützt. Das Lager weist insbesondere zwei Kegelrollenlager auf. Der Planetenträger der zweiten Planetenradstufe ist insbesondere mittels der Sonnenwelle an dem ersten Gehäuse gelagert.

Gemäß zumindest einer Ausführungsform weist die Triebstranganordnung eine flexible Dichtung zwischen dem ersten Gehäuse und dem zweiten Gehäuse auf. Die flexible Dichtung umgibt die Sonnenwelle. Die flexible Dichtung ist beispielsweise ein balgartiges Metall und/oder Gummi, das eine Relativbewegung zwischen den beiden Modulen zulässt. Die Dichtung dichtet den Abstand zwischen den beiden Gehäusen der beiden Module ab, sodass die Sonnenwelle in diesem Bereich geschützt ist. Die Bereiche, in denen die Sonnenwelle jeweils in das Gehäuse des ersten Moduls und des zweiten Moduls eintritt, sind so gegen die Umgebung abgedichtet. Beispielsweise dient die Dichtung auch dazu, aus dem ersten Modul austretendes Getriebeöl in das zweite Modul zu leiten. Die Dichtung ermöglicht auch zwischen den beiden Modulen eine Abdichtung gegen die Atmosphäre, damit kann auf eine berührende Dichtung der beiden Gehäuse zur Sonnenwelle verzichtet werden. Eine berührende Dichtung ist einer Relativbewegung und damit Verschleiß ausgesetzt. Ebenfalls kann auf eine aufwendige Spaltdichtung zwischen den beiden Gehäusen und der Sonnenwelle verzichtet werden, die durch die großen axialen und radialen Relativbewegungen sehr aufwendig in der Ausführung ist.

Gemäß zumindest einer Ausführungsform ist das zweite Gehäuse mittels einer Verbindungsvorrichtung an einem Maschinenträger der Windenergieanlage befestigbar. Die Verbindungsvorrichtung weist ein elastisches Dämpfungselement auf. Die Verbindungsvorrichtung dient insbesondere zur Abstützung des zweiten Moduls in Bezug auf das Drehmoment. Insbesondere ermöglicht die Verbindungsvorrichtung eine Ausführung wie von einer Zweipunktlagerung bekannt. Das elastische Dämpfungselement verringert ein Einkoppeln von Schwingungen des zweiten Moduls in dem Maschinenträger. Somit können insbesondere für den Menschen hörbare akustische Emissionen reduziert werden. Bei Verwendung des elastischen Dämpfungselements ist es insbesondere möglich, auf das Entkopplungselement zwischen den Modulen zu verzichten und umgekehrt.

Gemäß einem Aspekt der Erfindung wird eine Triebstranganordnung für eine Windenergieanlage angegeben, bei der ein Planetenträger einer ersten Planetenradstufe mittels einer Steckverzahnung mit einer Rotorwelle eines Rotors der Windenergieanlage verbunden ist. Die Rotorwelle ist mittels eines Rotorlagers an einem Rotorlagergehäuse abgestützt. Die Steckverzahnung und das Rotorlager sind in einer gemeinsamen Ebene angeordnet. Die Ebene ist senkrecht zur Längsachse der Triebstranganordnung ausgerichtet. Die Steckverzahnung ist innerhalb des generatorseitigen Rotorlagers angeordnet. Somit ist der Planetenträger auch ohne zusätzliche Lager verlässlich abgestützt. Insbesondere ist dieser Aspekt unabhängig von einer Aufteilung der Triebstranganordnung einsetzbar. Beispielsweise ist diese Ausführungsform in einer Triebstranganordnung verwendbar, die als eine einzige Einheit mit allen Planetenradstufen ausgebildet ist.

Gemäß einem Aspekt der Erfindung wird eine Triebstranganordnung für eine Windenergieanlage angegeben, bei der ein Planetenträger einer ersten Planetenradstufe mittels mindestens einem Stützlager an einem Gehäuse der ersten Planetenradstufe gegenüber Gewichtskräften abgestützt ist. Insbesondere sind zwei Stützlager vorgesehen. Die Stützlager weisen jeweils eine Achse auf, beispielsweise einen Bolzen. Die Achse ist insbesondere flexibel ausgebildet. Die Achse ist ausreichend stabil ausgebildet, um die im Betrieb der Windenergieanlage auftretenden Gewichtskräfte aufzunehmen, insbesondere bei Stillstand eines Rotors der Windenergieanlage. Die Stützlager weisen jeweils ein Wälzlager auf, beispielsweise ein Rollenlager, das zwischen der Achse und dem Planetenträger angeordnet ist. Somit kann der Planetenträger relativ zu den Achsen rotieren. Die Stützlager dienen insbesondere zum Kompensieren der Gewichtskräfte beim Stillstand und während einer Startphase der Windenergieanlage bis sich durch die Rotation des Planetenträgers ein tragender Ölfilm zwischen Hohlrad und Planetenrad und/oder zwischen Sonne und Planetenrad gebildet hat.

Weitere Vorteile, Merkmale und Weiterbildungen ergeben sich aus den nachfolgenden, in Verbindung mit den Figuren erläuterten Beispielen. Gleiche, gleichartige und gleich wirkende Elemente können figurenübergreifend mit den gleichen Bezugszeichen versehen sein.

Es zeigen:
Figur 1 eine schematische Darstellung einer Windenergieanlage
Figur 2 eine schematische Darstellung einer Triebstranganordnung gemäß einem Ausführungsbeispiel,
Figur 3 eine schematische Darstellung einer Triebstranganordnung gemäß einem Ausführungsbeispiel,
Figur 4 eine schematische Darstellung einer Detailansicht einer Triebstranganordnung gemäß einem Ausführungsbeispiel,
Figur 5 eine schematische Darstellung einer Sonnenwelle mit zwei Verzahnungen gemäß einem Ausführungsbeispiel,
Figur 6 eine schematische Darstellung einer Triebstranganordnung gemäß einem Ausführungsbeispiel,
Figur 7 eine schematische Darstellung einer Befestigung eines Gehäuses gemäß einem Ausführungsbeispiel,
Figur 8 eine schematische Darstellung einer Triebstranganordnung gemäß einem Ausführungsbeispiel, und
Figur 9 eine schematische Darstellung einer Triebstranganordnung gemäß einem Ausführungsbeispiel.

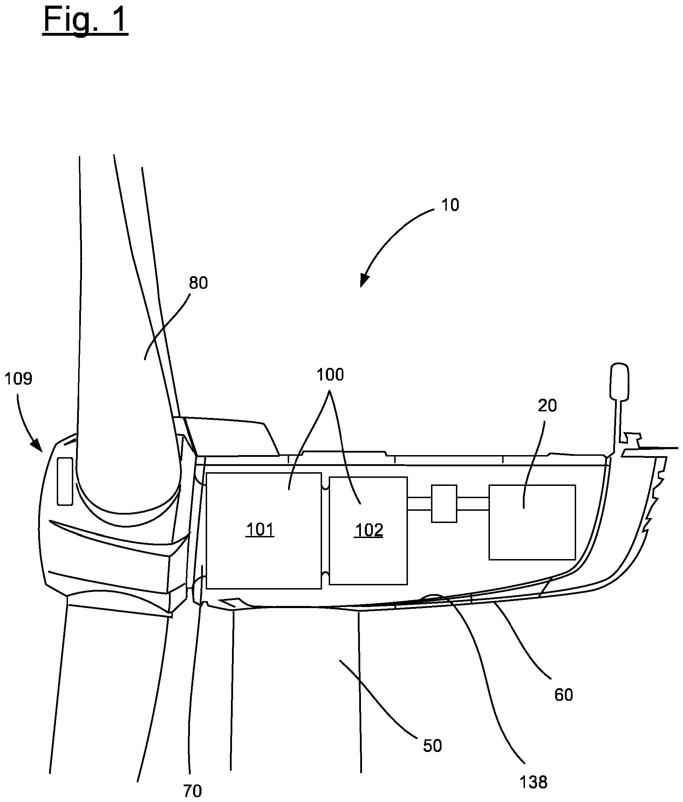

Figur 1 zeigt eine schematische Darstellung einer Windenergieanlage 10 gemäß einem Ausführungsbeispiel. Die Windenergieanlage 10 weist einen Turm 50 auf. Der Turm 50 ist mittels eines Fundaments auf einem Untergrund befestigt (nicht dargestellt). An einem dem Untergrund gegenüberliegenden Ende des Turms 50 ist eine Gondel 60 drehbar gelagert. Die Gondel 60 weist beispielsweise einen Generator 20 auf, der über eine Triebstranganordnung 100 und eine Rotorwelle 70 mit einem Rotor 109 gekoppelt ist. Der Rotor 109 weist ein oder mehrere Rotorblätter 80 auf, die an einer Rotornabe angeordnet sind.

Der Rotor 109 wird im Betrieb durch eine Luftströmung, beispielsweise Wind, der entlang einer Hauptströmungsrichtung einströmt, in Rotation versetzt. Diese Rotationsbewegung wird über die Rotorwelle 70 und die Triebstranganordnung 100 zu dem Generator 20 übertragen. Der Generator 20 wandelt die kinetische Energie des Rotors 109 in elektrische Energie um.

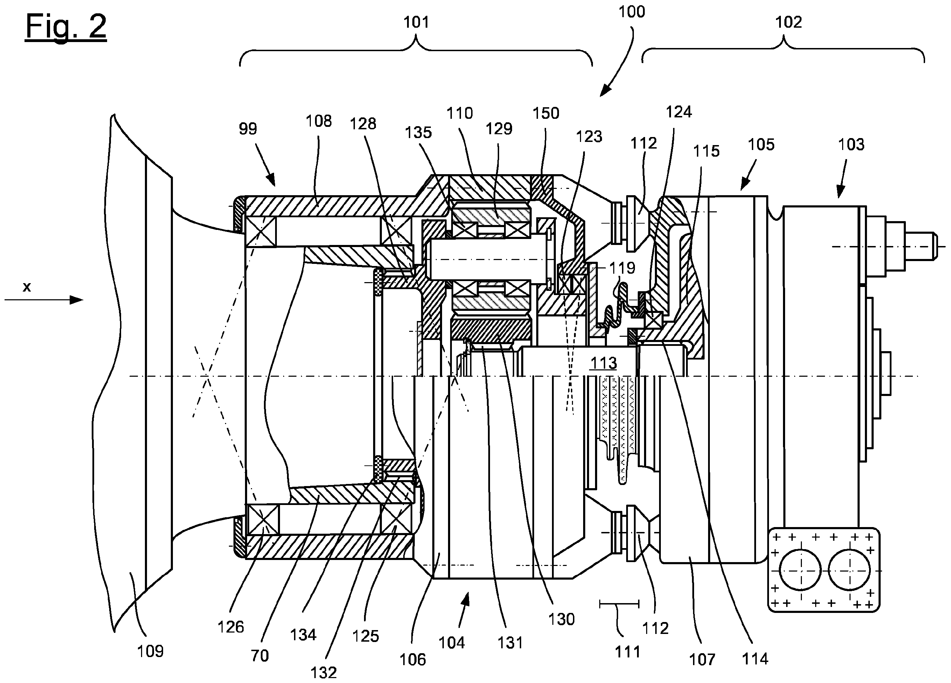

Figur 2 zeigt eine Triebstranganordnung 100 gemäß einem Ausführungsbeispiel. Die Triebstranganordnung 100 ist insbesondere Teil der Windenergieanlage 10. Die Triebstranganordnung 100 ist eingerichtet, eine langsame Bewegung eines Rotors 109 der Windenergieanlage 10 in eine schnellere Drehbewegung für den Generator 20 zu übersetzen.

Die Triebstranganordnung 100 weist ein erstes Modul 101 auf. Die Triebstranganordnung 100 weist ein zweites Modul 102 auf. Das erste Modul 101 ist dem Rotor 109 zugewandt angeordnet. Das zweite Modul 102 ist dem Rotor 109 abgewandt angeordnet und insbesondere mit dem Generator 20 verbindbar.

Der Rotor 109 ist über die Rotorwelle 70 mittels Rotorlagern 125 und 126 in einem Rotorlagergehäuse 108 gelagert. Das Rotorlagergehäuse ist beispielsweise mit einem Maschinenträger 138 der Windenergieanlage gekoppelt. Der Maschinenträger 138 ist beispielsweise Teil einer Gondel der Windenergieanlage.

Das erste Modul 101 weist eine erste Planetenradstufe 104 auf. Die Planetenradstufe ist mittels eines Planetenträgers 128 und der Rotorwelle 70 mit dem Rotor 109 verbunden. Die Rotorwelle 70 und der Planetenträger 128 übertragen eine Rotation des Rotors 109 zur ersten Planetenradstufe 104. Ein Hohlrad 110 der ersten Planetenradstufe 104 ist fest mit dem Rotorlagergehäuse 108 und einem Gehäuse 150 der ersten Planetenradstufe 104 verbunden und bildet zusammen mit diesen ein erstes Gehäuse 106 des ersten Moduls 101. Die Rotation des Planetenträgers 128 führt zu einer Rotation von Planeten 129 der ersten Planetenradstufe 104 relativ zu dem Hohlrad 110. Hierdurch wird ein Sonnenrad 130 der ersten Planetenradstufe 104 in Rotation versetzt.

Die Elemente der ersten Planetenradstufe sind in dem ersten Gehäuse 106 des ersten Moduls 101 angeordnet. Beispielsweise ist das Hohlrad 110 Teil dieses Gehäuses. Alternativ weist das Modul 101 ein Gehäuse 106 auf, innerhalb dessen auch das Hohlrad 110 angeordnet ist. Das erste Gehäuse 106 schließt das erste Modul 101 insbesondere in Richtung des Generators ab. Das erste Modul 101 ist somit ein eigenständiges Bauteil der Triebstranganordnung 100. Insbesondere ist das erste Gehäuse 106 abgedichtet, sodass Getriebeöl der ersten Planetenradstufe 104 im normalen Betrieb nicht oder nicht wesentlich aus dem Gehäuse 106 gelangt. Die Elemente der ersten Planetenradstufe 104, insbesondere das Hohlrad 110, die Planeten 129, das Sonnenrad 130 und der Planetenträger 128 sind an dem ersten Gehäuse 106 abgestützt. Insbesondere sind für die funktionsfähige Anordnung der ersten Planetenradstufe 104 keine weiteren Elemente der Triebstranganordnung 100 außerhalb des ersten Moduls 101 notwendig.

Das zweite Modul 102 weist eine zweite Planetenradstufe 105 auf. Das zweite Modul 102 weist eine Stirnradstufe 103 auf. Die Stirnradstufe ist dazu ausgebildet, die Triebstranganordnung 100 mit dem Generator zu koppeln. Das zweite Modul 102 weist ein zweites Gehäuse 107 auf. Die Elemente der zweiten Planetenradstufe 105 und der Stirnradstufe 103 sind insbesondere in dem zweiten Gehäuse 107 angeordnet und von diesem gehalten. Das zweite Gehäuse 107 ist insbesondere ein eigenständiges Gehäuse, das die zweite Planetenradstufe 105 und die Stirnradstufe 103 nach außen hin abdichtet. Insbesondere gelangt im betriebsfähigen Zustand kein oder nur unwesentlich Getriebeöl aus dem zweiten Gehäuse 107.

Ein Planetenträger 115 der zweiten Planetenradstufe 105 ist mittels eines ersten rotorseitigen Lagers 124 an dem zweiten Gehäuse 107 abgestützt. Ein zweites Lager ist generatorseitig des Planetenträgers 115 zwischen dem zweiten Gehäuse 107 und dem Planetenträger 115 angeordnet. Somit ist eine Rotation des Planetenträgers 115 relativ zum zweiten Gehäuse 107 möglich.

Das erste Gehäuse 106 und das zweite Gehäuse 107 sind entlang einer X-Richtung in einem Abstand 111 zueinander angeordnet. Das erste Gehäuse 106 und das zweite Gehäuse 107 sind zueinander separate, eigenständige Gehäuse, die die jeweiligen Bauteile des ersten Moduls beziehungsweise des zweiten Moduls 107 halten.

Das erste Modul 101 und das zweite Modul 102 sind miteinander koppelbar, um die Rotationsbewegung des Rotors 109 auf den Planetenträger 115 der zweiten Planetenradstufe 105 und nachfolgend auf den Generator zu übertragen. Die Kopplung der Module 101 und 102 erfolgt mittels einer Sonnenwelle 113 und Entkopplungselementen 112. Die Entkopplungselemente 112 dienen zur mechanischen Abstützung des zweiten Gehäuses 107 am ersten Gehäuse 106. Somit ist es beispielsweise ausreichend, dass lediglich das erste Modul 101 am Maschinenträger befestigt ist. Das zweite Modul 107 ist mittels der Entkopplungselemente 112 am ersten Modul 101 befestigt.

Zur Übertragung der Rotationsbewegung des Sonnenrads 130 der ersten Planetenradstufe 104 auf den Planetenträger 115 der zweiten Planetenradstufe 105 dient die Sonnenwelle 113. Die Sonnenwelle 113 weist eine Außenverzahnung auf und ist über einer Verzahnung 131 im Inneren des Sonnenrads 130 mit dem Sonnenrad 130 verbunden. Die Sonnenwelle 113 erstreckt sich entlang der X-Richtung nach außerhalb des ersten Gehäuses 106. Die Sonnenwelle 113 erstreckt sich weiter entlang der X-Richtung ins Innere des zweiten Gehäuses 107. Dort ist die Sonnenwelle 113 mittels einer Steckverbindung 114 mit dem Planetenträger 115 der zweiten Planetenradstufe 105 verbunden. Die Sonnenwelle 113 überbrückt somit den Abstand 111 zwischen den beiden Gehäusen 106 und 107.

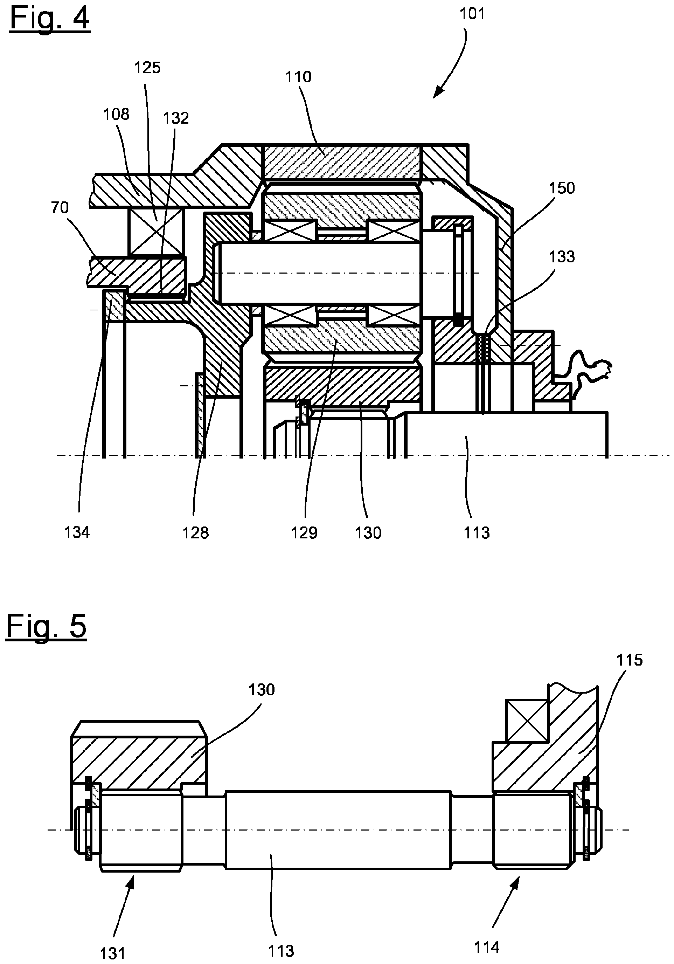

Wie auch in Figur 5 gezeigt ist, weist die Sonnenwelle 113 gemäß Ausführungsbeispielen an ihren beiden Enden jeweils eine Verzahnung auf. Die Sonnenwelle 113 erstreckt sich entlang einer Längsachse zwischen ihren beiden Enden. An einem rotorseitigen Ende ist die Verzahnung 131 vorgesehen. Die Verzahnung 131 dient zur Kopplung der Sonnenwelle 113 mit dem Sonnenrad 130 der ersten Planetenradstufe 104. An einem generatorseitgen Ende ist die Verzahnung 114 vorgesehen. Die Verzahnung 114 dient zur Kopplung mit dem Planetenträger 115 der zweiten Planetenradstufe 105. Somit ist eine Relativbewegung zwischen dem ersten Modul 101 und dem zweiten Modul 102 ermöglich. Das zweite Modul 102 ist elastisch am ersten Modul 101 abgestützt.

Zur Abdichtung des Zwischenraums zwischen den beiden Gehäusen 106 und 107 ist beispielsweise eine Dichtung 119 vorgesehen. Die Dichtung 119 umgibt entlang des Abstands 111 die Sonnenwelle 113. Die Dichtung 119 ist insbesondere flexibel und beispielsweise aus einem Metall, Gummi oder Kunststoff. Die Dichtung 119 umgibt die Sonnenwelle 113 balgartig zwischen den beiden Modulen 101 und 102.

Die Kopplung des zweiten Moduls 102 am ersten Modul 101 mittels der Entkopplungselemente 112, der Sonnenwelle 113 und der Dichtung 119 ermöglicht eine Relativbewegung zwischen dem zweiten Modul 102 und dem ersten Modul 101. Zudem werden Schwingungen, die beispielsweise aufgrund der Bewegungen in der zweiten Planetenradstufe 105 und der Stirnradstufe 103 entstehen, nicht auf das erste Modul 101 und somit nicht auf den Maschinenträger übertragen. Dies trägt zur Reduzierung der Geräuschemissionen der Triebstranganordnung 100 im Betrieb bei. Zur Dämpfung der Schwingung zwischen dem zweiten Modul 102 und dem ersten Modul 101 dienen die Entkopplungselemente 112. Diese sind aus einem elastischen Material, beispielsweise aus einem Elastomer, das ein mechanisches Abstützen ermöglicht und dabei Schwingungen, insbesondere in einem für den Menschen hörbaren Bereich möglichst dämpft.

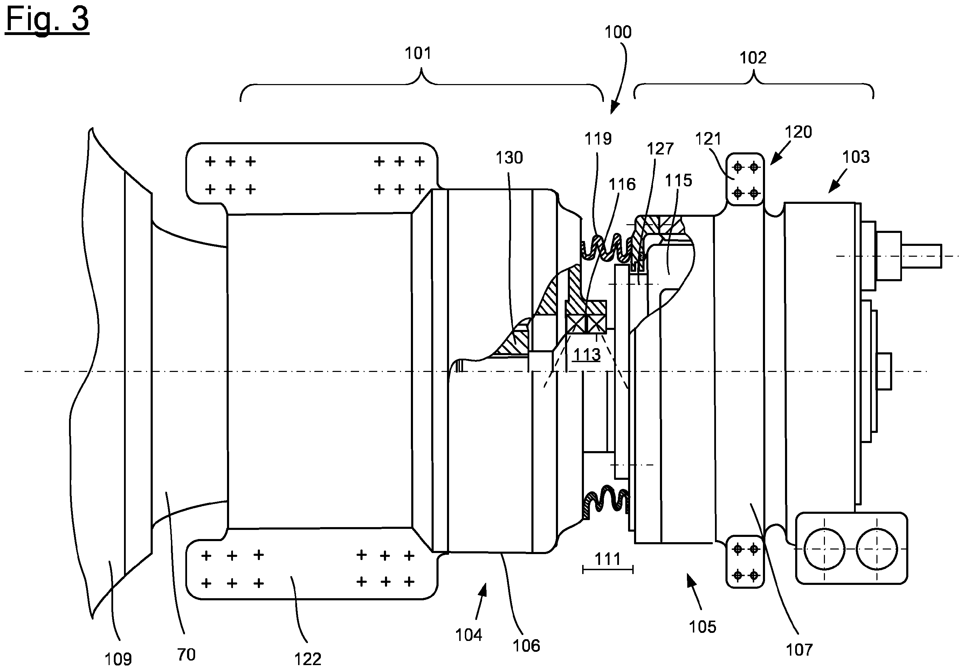

Figur 3 zeigt die Triebstranganordnung 100 gemäß einem weiteren Ausführungsbeispiel. Im Folgenden wird vorrangig auf die Unterschiede zum Ausführungsbeispiel der Figur 2 eingegangen. Im Übrigen entspricht das Ausführungsbeispiel der Triebstranganordnung 100 der Figur 3 dem Ausführungsbeispiel der Triebstranganordnung wie in Verbindung mit Figur 2 erläutert.

Ein Flansch 122 ist vorgesehen, um das Rotorlagergehäuse 108 am Maschinenträger zu befestigen. Hierdurch ist auch das erste Gehäuse 106 des ersten Moduls 101 am Maschinenträger befestigt.

Das zweite Modul 102 ist mittels einer Verbindungsvorrichtung 120 eigenständig mit dem Maschinenträger verbunden. Die Verbindungsvorrichtung 120 ist insbesondere an dem zweiten Gehäuse 107 des zweiten Moduls 102 vorgesehen. Beispielsweise ist die Verbindungsvorrichtung 120 nach Art einer 2-Punkt-Fixierung ausgebildet und stützt die Reaktionsmomente der Planetenradstufe 105 über das Gehäuse 107 am Maschinenträger ab. Die dafür erforderliche radiale und axiale Fixierung erfolgt über die Lagereinheit 116.

Zwischen dem zweiten Gehäuse 107 und dem Maschinenträger ist an der Verbindungsvorrichtung 120 ein Dämpfungselement 121 vorgesehen. Das Dämpfungselement 121 dämpft Schwingungen des zweiten Moduls 107, sodass diese nicht auf den Maschinenträger übertragen werden. Hierdurch ist im Betrieb eine Geräuschemission verringerbar.

Die Sonnenwelle 113 ist im ersten Modul 101 mittels eines Lagers 116 an dem erste Gehäuse 106 gehalten. Beispielsweise weist das Lager 116 zwei Kegelrollenlager auf. Die Sonnenwelle 113 ist starr mit dem Planetenträger 115 verbunden. Beispielsweise ist der Planetenträger 115 starr mittels einer Flanschverbindung 127 an der Sonnenwelle 113 fixiert. Das Gehäuse 107 ist beispielweise mittels eines vorgespannten Kegelrollenlagerpaars am Planetenträger 115 abgestützt.

Die Triebstranganordnung 100 ist über die Rotorwelle 70 mit dem freien Ende des Rotors 109 verschraubt, beispielsweise mittels einer Flanschverbindung. Somit ist es möglich, das Drehmoment des Rotors 109 auf die Triebstranganordnung 100 zu übertragen.

Der modulartige Aufbau der Triebstranganordnung 100 mit dem ersten Modul 101 das autark zum zweiten Modul 102 ist, ermöglicht einen unabhängigen Einsatz der beiden Module 101, 102. Beispielsweise treten im Betrieb Schäden vorrangig in der zweiten Planetenradstufe 105 und/oder der Stirnradstufe 103 auf, die in der Triebstranganordnung 100 in dem zweiten Modul 102 zusammengefasst sind. Das zweite Modul 102 ist leicht von dem ersten Modul 101 entkoppelbar. Somit ist ein leichter Austausch der zweiten Planetenradstufe 105 und der Stirnradstufe 103 möglich, ohne dass die erste Planetenradstufe 105 betroffen ist. Dies wird insbesondere ermöglicht durch die beiden selbständigen Gehäuse 106 und 107 der beiden Module 101, 102.

Außerdem ermöglicht die Auftrennung der Triebstranganordnung 100 in das erste Modul 101 und das zweite Modul 102 einen getrennten Transport der beiden Module 101, 102 und eine getrennte Montage und Errichtung an der Windenergieanlage. Somit müssen zulässige Traglasten von Transportmitteln und Hublasten bei der Montage nicht für die gesamte Triebstranganordnung 100 berücksichtigt werden sondern nur für jedes der Module 101, 102 einzeln. Das erste Modul 101 bildet eine abgeschlossene Einheit mit dem Rotorlagergehäuse 108 und der ersten Planetenradstufe 104. Das zweite Modul 102 bildet eine abgeschlossene Einheit mit der zweiten Planetenradstufe 105 und der Stirnradstufe 103.

Wie in Figur 2 dargestellt, ist die erste Planetenradstufe 104 beispielsweise über das Hohlrad 110 direkt mit dem Rotorlagergehäuse 108 verbunden, beispielsweise verschraubt. In diesem Ausführungsbeispiel ist der Planetenträger 128 insbesondere rotorseitig nicht unmittelbar gelagert, sondern mit der Rotorwelle 70 verbunden. Beispielsweise ist der Planetenträger 128 mittels einer Steckverzahnung in einer als Hohlwelle ausgebildeten Rotorwelle 70 des Rotors 109 axial und einseitig radial geführt. Der Planetenträger 128 ist beispielsweise generatorseitig nicht über ein Wälzlager gehalten. Der Planetenträger stützt sich mittels den Planeten 129 an dem Hohlrad 110 ab.

Gemäß Ausführungsbeispielen ist ein Lager 123 zwischen dem Planetenträger 128 und dem Gehäuse 150 vorgesehen, das den Planetenträger 128 im Hohlrad 110 zentriert und axial führt. Das Lager kann als Kegelrollenlagerpaar in X-Anordnung ausgeführt werden (Fig. 2). Es ist auch ein Kegelrollenlagerpaar in O-Anordnung vorstellbar, dass den gesamten Planetenträger stützt und im Hohlrad führt.

Das Drehmoment wird zwischen der ersten Planetenradstufe 104 und der zweiten Planetenradstufe 105 mittels der Sonnenwelle 113 übertragen. Die Sonnenwelle 113 ist beispielsweise mit beidseitig ballig ausgeführten Steckverzahnungen ausgebildet. Die Sonnenwelle 113 ist beispielsweise doppelt katarisch ausgeführt. Die Sonnenwelle 113 dient zur Kupplung zwischen dem ersten Modul 101 und dem zweiten Modul 102. An ihrem dem Rotor 109 zugewandten Ende ist die Sonnenwelle 113 mit dem Sonnenrad 130 der ersten Planetenradstufe 104 verbunden. An ihrem dem Generator zugewandten Ende ist die Sonnenwelle 113 mit dem Planetenträger 115 der zweiten Planetenradstufe 105 verbunden. Die Verbindungen der Sonnenwelle 113 zu dem ersten Modul 101 und dem zweiten Modul 102 ermöglichen jeweils eine Relativbewegung der beiden Module 101, 102 zueinander.

Die Entkopplungselemente 112 gemäß dem Ausführungsbeispiel der Figur 2 ermöglichen ein elastisches Abstützen von Rückstellmomenten vom zweiten Modul 102 zum Gehäuse 106 des ersten Moduls 101. Die Entkopplungselemente 112 dienen gemäß Ausführungsbeispielen zudem zur genauen radialen, axialen und Winkel-Ausrichtung der beiden Module 101, 102 zueinander.

Alternativ ist das zweite Modul 102 mittel der Verbindungsvorrichtung 120 mit dem Dämpfungselement 121 elastisch am Maschinenträger angebunden. Die Anbindung des ersten Moduls 101 und/oder des zweiten Moduls 102 am Maschinenträger ist auf unterschiedliche Arten realisierbar, wobei stets ein Dämpfungselement 121 und/oder ein Entkopplungselement 121 vorgesehen ist, um eine Übertragung der Schwingungen aus den Zahneingriffen der zweiten Planetenradstufe 105 und der Stirnradstufe 103 auf den Maschinenträger möglichst zu reduzieren.

Gemäß Ausführungsbeispielen ist das Sonnenrad 130 über die Sonnenwelle 113 in dem Lager 116 gelagert. Das zweite Modul 102 ist auf das generatorseitige Ende der Sonnenwelle 113 geschoben und beispielsweise mittels einer Schrumpfverbindung fixiert. Alternativ ist auch die Flanschverbindung 127 möglich, die in Figur 2 dargestellt ist. Dann muss das zweite Modul 102 insbesondere nur in Bezug auf das Drehmoment elastisch abgestützt werden. Hierfür dient insbesondere die Verbindungsvorrichtung 120. Die Abstützung des zweiten Moduls 102 erfolgt in diesem Ausführungsbeispiel vergleichbar einer 2-Punkt-Lagerung.

Der Planetenträger 115 der zweiten Planetenradstufe 105 ist gemäß Ausführungsbeispielen mittels eines generatorseitig angeordneten Kegelrollenpaars gelagert (nicht explizit dargestellt). Auch eine Lagerung mittels eines rotorseitigen Kegelrollenlagers und eines generatorseitig angeordneten Kegelrollenlagers ist möglich.

Figur 4 zeigt eine Abstützung des Planetenträgers 128 der ersten Planetenradstufe 104 gemäß einer Ausführungsform. Axialkräfte, die beispielsweise aufgrund der Neigung des Triebstranges entstehen, werden über ein Gleitlager 133 zwischen dem Planetenträger 128 und dem Gehäuse der ersten Planetenradstufe 150 abgeführt. Radialkräfte werden an der Steckverzahnung 132 rotorseitig abgeführt. Über die Steckverzahnung 132 können der Planetenträger 128 und der Rotor 109, insbesondere die Rotorwelle 70, in Kontakt miteinander gelangen. Somit ist eine radial einseitige Führung des Planetenträgers 128 möglich.

Gemäß einem Ausführungsbeispiel ist die Steckverzahnung 132 zur Verbindung der Rotorwelle 70 und dem Planetenträger 128 genau in der Ebene eine Rotorlagers 125, das insbesondre als Kegelrollenlager ausgebildet ist. Das Rotorlager 125 dient zur Lagerung des Rotors 109 und insbesondere der Rotorwelle 70. Das Rotorlager 125 ist vorgespannt. Das Rotorlager 125 ist radial und/oder axial spielfrei. Es ist möglich den Planetenträger 128 der ersten Planetenradstufe 104 lediglich einseitig zu führen. In Richtung des Rotors 109 wirkende, resultierende Axialkräfte werden mittels der Streckverzahnung 125 und des direkt die Steckverzahnung 132 umgebenden Rotorlagers 125 abgestützt. Die Steckverzahnung 132 ist im dargestellten Ausschnitt der Triebstranganordnung 100 direkt unter dem generatorseitigen Rotorlager 125 angeordnet. Dadurch führen im Betrieb etwaige Verformungen der Rotorwelle 70 und/oder des Rotorlagergehäuses 108 nicht zu einer wesentlichen Verlagerung des Planetenträgers 128 im Hohlrad 110. Auf eine direkte rotorseitige Lagerung des Planetenträgers 128 der ersten Planetenradstufe 104 kann verzichtet werden. Dies ist insbesondere auch bei einer Triebstranganordnung möglich, die nicht die anmeldungsgemäße Segmentierung in die Module 101, 102, 103 aufweist.

Bei entsprechender Ausführung der Steckverzahnung 132 mit axialer Sicherung 134 kann auf die Gleitlagerung 133 verzichtet werden. Der Planetenträger wird dann über die Steckverzahnung auch axial geführt. Bei dieser Ausführungsform liegen im Stillstand des Rotors die Planeten 129 komplett oder auch nur teilweise über die Breite der Verzahnung im Hohlrad 110 auf. Beim Start der Windenergieanlage schwimmt der Planetenträger 128 durch das sich unten im Hohlrad zwischen Hohlrad- und Planetenradverzahnung befindende Öl auf.

Beim zweiten Modul 102 ist gemäß Ausführungsformen eine hydraulische Ausgleichsvorrichtung vorgesehen zur Reduzierung von vertikalen Querkräften aufgrund von Verformungen oder Fertigungs- und Montageabweichungen. Die hydraulische Ausgleichsvorrichtung ist optional.

Gemäß Ausführungsbeispielen besteht die Rotorlagerung zumindest aus einem Rotorlagergehäuse 108, der Kegelrollenlagereinheit 125 und 126 sowie aus einer Gusshohlwelle 70. Dadurch wird die Zugänglichkeit der Triebstranganordnung 100 ermöglicht, insbesondere eine Montage und/oder Demontage der Steckverzahnung zwischen der Rotorwelle 70 und dem Planetenträger 128 des ersten Moduls 101 und der Steckverzahnung zwischen dem Sonnenrad 130 der ersten Planetenradstufe 104 und der Sonnenwelle 113.

Das zweite Modul 102 ist mittels des Dämpfungselements 120 oder nur mittelbar über das erste Modul 101 mittels des Entkopplungselementes 112 mit dem Maschinenträger verbunden. Somit werden mittel- und hochfrequente Schwingungen aus der zweiten Planetenradstufe 105 und der Stirnradstufe 103 von der Tragstruktur abgekoppelt. Der tief frequente Schall aus der ersten Planetenradstufe 104 liegt unterhalb des für den Menschen hörbaren Bereichs. Somit ist eine Entkopplung dieses tief frequenten Schalls weniger wichtig.

Die Triebstranganordnung 100 ermöglicht ein Entkoppeln des zweiten Moduls 102 von der Tragstruktur, bei dem die Schwingungsanregung aus den Zahneingriffen nachteilig auf die Schallemission wäre. Das erste Modul 101 muss nicht wegen Schallemissionen entkoppelt werden. Aufgrund der wesentlich geringeren Reaktionskräfte am zweiten Modul 102 können die Entkopplungselemente 112 und/oder das Dämpfungselement 121 weich ausgeführt werden, ohne dass sehr große Auslenkungen des zweiten Moduls 102 die Folge sind. Somit können geforderte Lebensdauern der Entkopplungselementen 112 beziehungsweise Dämpfungselementen 121 auch bei weicheren Ausführungen erreicht werden.

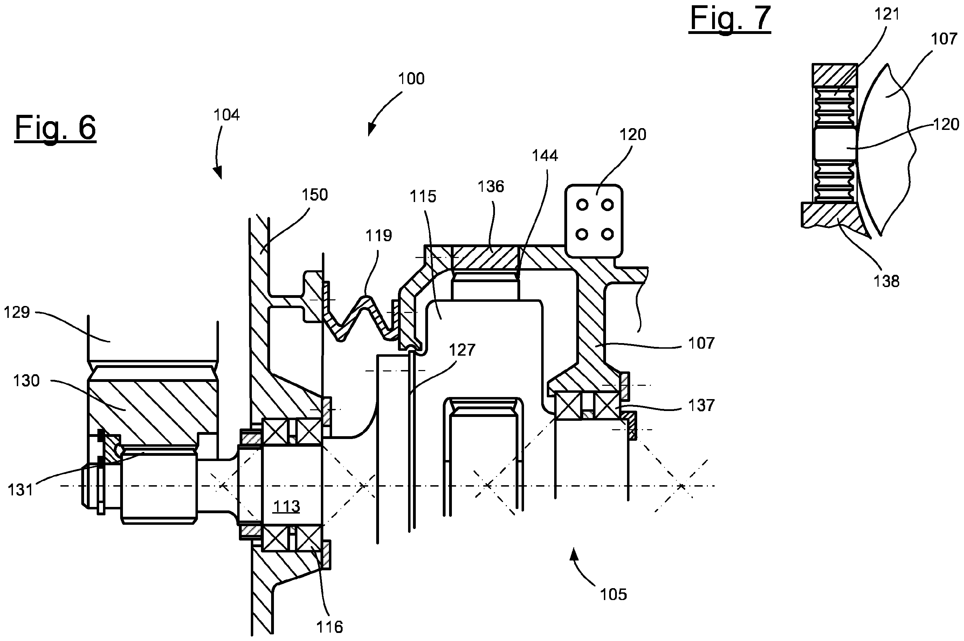

Figur 6 zeigt die Triebstranganordnung 100 gemäß dem Ausführungsbeispiel der Figur 3.

Die Sonnenwelle 113 ist am Gehäuse 150 der ersten Planetenradstufe 104 mittels der Lager 116 abgestützt. Rotorseitig ist die Sonnenwelle 113 mittels der Verzahnung 131 mit dem Sonnenrad 130 verbunden.

An der zweiten Planetenradstufe 105 ist die Sonnenwelle 113 mittels der Flanschverbindung 127 mit dem Planetenträger 115 der zweiten Planetenradstufe 105 verbunden. Ein Planet 144 der zweiten Planetenradstufe 105 ist in einem Hohlrad 136 der zweiten Planetenradstufe 105 geführt.

Der Planetenträger 115 der zweiten Planetenradstufe 105 ist mittels Lagern 137 generatorseitig im zweiten Gehäuse 107 gehalten, abgestützt und gelagert. Die Lager 137 weisen einen vergleichsweise kleinen Durchmesser auf. Herkömmliche Triebstranganordnungen benötigen Lager mit größeren Durchmessern. Insbesondere auf Grund der Abstützung des zweiten Gehäuses 107 mittels der Verbindungsvorrichtung 120 und dem Dämpfungselement 121 an dem Maschinenträger 138 der Windenergieanlage 10 ist es möglich, die kleineren Lager 137 einzusetzen. Diese sind kostengünstiger und verlässlicher als größere Lager.

Das zweite Gehäuse 107 ist mittels der Verbindungsvorrichtung 120 und dem Dämpfungselement 121 an dem Maschinenträger 138 der Windenergieanlage 10 befestigt, wie auch detailliert in Figur 7 gezeigt. Das Dämpfungselement 121 dient zur Abstützung der zweiten Planetenradstufe 105 am Maschinenträger 138. Mittels des Dämpfungselements 121 sind Drehmomente von der zweiten Planetenradstufe 105 am Maschinenträger 138 abstützbar.

Die Sonnenwelle 113 ist im ersten Gehäuse 106 der ersten Planetenradstufe 104 fest gelagert. Somit hängt das zweite Modul 102 wie bei einer Zwei-Punkt-Lagerung oder einer Vier-Punkt-Lagerung an der Sonnenwelle 113. Über die Verbindungsvorrichtung 120, die auch als Drehmomentstützte bezeichnet werden kann, und das Dämpfungselement 121 wird im Betrieb das Drehmoment abgestützt. Durch gezielte Ausrichtung der Anordnung der Verbindungsvorrichtung 120 mit dem Dämpfungselement 121 zum Maschinenträger 138 ist es möglich, das zweite Modul 102 gegen die Schwerkraft abzustützen. Hierdurch ist insbesondere eine Entlastung des Lagers 116 möglich.

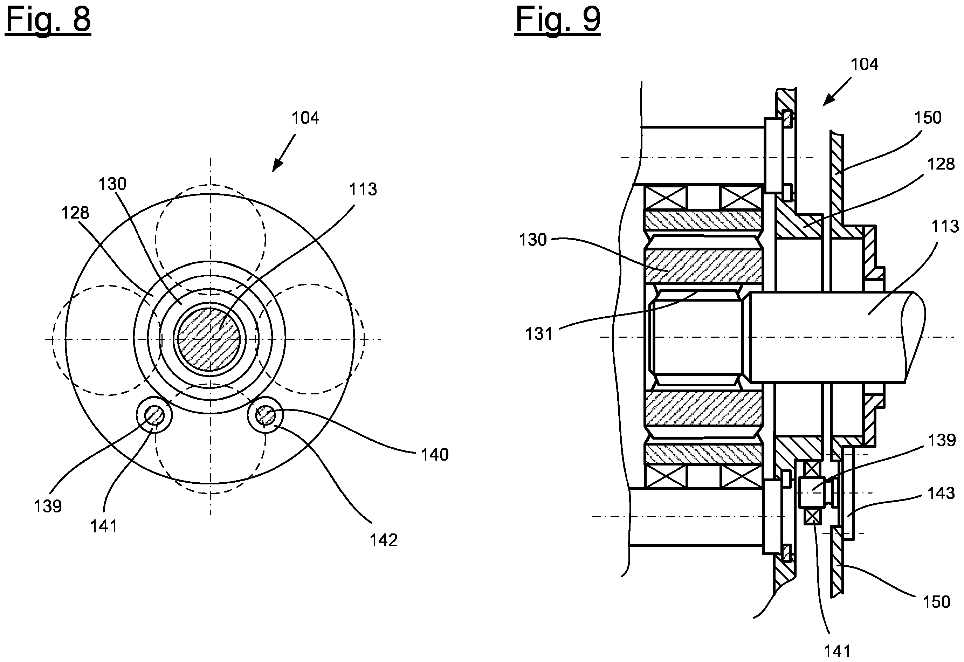

Figuren 8 und 9 zeigen eine Abstützung für den Planetenträger 128 der ersten Planetenradstufe 104 gemäß einem Ausführungsbeispiel. Diese Art der Abstützung ist bei einer Triebstranganordnung gemäß den beschriebenen Ausführungsbeispielen einsetzbar. Alternativ ist diese Art der Abstützung auch bei Triebstranganordnungen einsetzbar, die keine modulartige Aufteilung der Planetenradstufen aufweisen.

Figur 8 zeigt eine Aufsicht auf die generatorseitige Stirnseite der ersten Planetenradstufe 104. In einem unteren Bereich sind Achsen 139 und 140 angeordnet. An der Achse 139 ist ein Wälzlager 141 vorgesehen. An der Achse 140 ist ein Wälzlager 142 vorgesehen. Die Achsen 139, 140 dienen zusammen mit den Wälzlagern 141, 142 zur Abstützung des Planetenträgers 128 der ersten Planetenradstufe 104. Insbesondere ist der Planetenträger 128 abgestützt, wenn sich der Rotor 109 nicht dreht oder vergleichsweise langsam dreht.

Figur 9 zeigt eine Schnittansicht der ersten Planetenradstufe 104 gemäß Figur 8. Der Planetenträger 128 ist mittels der Achsen 139, 140 und der Wälzlager 141, 142 gegenüber der Schwerkraft abgestützt. Die Achsen 139, 140 sind an dem Gehäuse 140 der ersten Planetenradstufe 104 fixiert. Beispielsweise sind die Achsen 139, 140 mittels jeweiliger Exzenterscheiben 143 an dem Gehäuse 150 fixiert. Dadurch ist eine radiale Positionierung der Achsen 139, 140 möglich. Somit ist eine radiale Positionierung der Wälzlager 141, 142 möglich. Der Planetenträger 128 ist mittels der Achsen 139, 140 und der Exzenterscheiben 143 an dem Gehäuse 150 abgestützt.

Die Abstützung mittels der Achsen 139, 140 ist an dem generatorseitigen Ende der ersten Planetenradstufe 104 vorgesehen. Der Planetenträger 128 ist an seinem generatorseitigen Ende über die elastisch gelagerten Wälzlager 141, 142 abgestützt. Die Wälzlager 141, 142 sind mittels der verformbaren Achsen 139, 140 und der Exzenterscheiben 143 beispielsweise mit dem Gehäuse 150 verschraubt. Somit ist der Planetenträger 128 insbesondere im Stillstand der Windenergieanlage 10 an zwei Stellen unterstützt. Die Achsen 139 und 140 sind beispielsweise jeweils in einem Winkel von 30° +/- 5° zur Horizontalen angeordnet. Die Achsen 139, 140 sind ausgebildet, die Gewichtskräfte zu kompensieren, bis sich bei steigender Rotordrehzahl durch den Abwälzvorgang ein tragender Ölfilm aufgebaut hat. Die Wälzlager 141, 142 sind beispielsweise mit balligem Außenring ausgeführt. Beispielsweise sind die Wälzlager 141, 142 jeweils als zylindrische Rollenlager ausgebildet.

Die beiden Getriebestufen 105 und 103 mit den höchsten Ausfallraten sind als eine Einheit im zweiten Modul 102 zusammengefasst und können einfach gemeinsam getauscht werden. Aufgrund der besseren Zugänglichkeit ist aber auch eine Reparatur mit einem Austausch einzelner Getriebekomponenten vorstellbar.

Die Abdichtung einer ölgeschmierten Rotorlagerung kann hinter der ersten Planetenradstufe 104 auf relativ geringem Durchmesser erfolgen. Die Rotorlagerung 99 ist in Verbindung mit der ersten Planetenradstufe 104 aufgrund des geringen Wellendurchmessers der Sonnenwelle 113 generatorseitig leichter abzudichten. Somit ist es auch möglich, auf die Dichtung 119 zu verzichten. Beispielsweise haben die erste Planetenradstufe 104 und die Rotorlagerung 99 eine gemeinsame Ölumlaufschmierung. Die Umlaufschmierung ist so aufgebaut, dass das Öl aus dem Zahneingriff der ersten Planetenradstufe 104 nicht in den Bereich des Rotorlagerung 99 gelangt, sondern direkt einem Filtersystem zugeführt wird.

Die Eingänge der Sonnenwelle 113 in das erste Gehäuse 108 und in das zweite Gehäuse 107 sind gegen die Umgebung mittels der Dichtung 119 aus Gummi oder Edelstahl abgedichtet. Die Dichtung 119 ermöglicht eine Relativbewegung zwischen dem ersten Modul 101 und dem zweiten Modul 102 und gleicht eine Relativbewegung aus. Beispielsweise ist die Dichtung 119 dazu eingerichtet, zwischen der Sonnenwelle 113 und dem Gehäuse 106 des ersten Moduls 101 austretendes Öl in das zweite Modul 102 zu leiten. In diesem Ausführungsbeispiel sind die beiden Module 101 und 102 mittels der Dichtung 119 gegen die Atmosphäre abgedichtet. Die Dichtung 119 ist insbesondere flexibel und beispielsweise aus einem Metall, Gummi oder Kunststoff.

Mittels eines Innendurchmessers der zylinderförmig ausgebildeten Dichtung 119 ist es möglich, die Füllhöhe des Getriebeölstands in dem ersten Modul 101 festzulegen.

Die erste Planetenradstufe 104 weist gemäß Ausführungsformen das Lager 123 auf, das in Richtung des Generators angeordnet ist. Das Lager 123 ist beispielsweise ein Kegelrollenlagerpaar in X-Anordnung, das den Planetenträger 128 mittig zum Hohlrad 110 führt und die Axialkräfte aus der Neigung des Triebstranges aufnimmt. Auch ein Ausführungsbeispiel ohne Planetenträgerlager in der ersten Planetenradstufe 104 ist möglich. Die Lager 123 sind auf der dem Generator zugewandten Seite der ersten Planetenradstufe 104 angeordnet und somit mit einem geringen Durchmesser ausführbar.

Die Triebstranganordnung 100 ermöglicht somit eine Reduzierung des Transport- und Errichtungsgewichts der einzelnen Module 101 und 102. Das zweite Modul 102 ist leicht austauschbar. Eine Reparatur der ersten Planetenstufe 104 nach Demontage von Modul 102 ist möglich. Die Reparatur kann den Austausch der Sonne 130 oder/und des Planetenträgers 128 inklusive Planeten 129 und Planetenlager 135 umfassen. Ein Austausch der Lager 123 auf der Windenergieanlage kann vorgenommen werden. Die Anzahl der Lagerlaufbahnen ist reduziert. Die Anzahl großer und kostenintensiver Lager ist reduziert beziehungsweise es können große und kostenintensive Lager entfallen. In der Triebstranganordnung 100 ist eine eindeutige Trennung von Schmierölbereichen möglich. Ein unzulässiger Verschleiß oder Getriebeschäden belasten somit nicht die gesamten Lagerstellen und Verzahnungen der Triebstranganordnung 100. Durch die Reduzierung des generatorseitigen Dichtdurchmessers der Rotorlagerung ist eine ölgeschmierte Rotorlagerung verlässlich realisierbar.

### Bezugszeichen

- 10: Windenergieanlage
- 20: Generator
- 50: Turm
- 60: Gondel
- 70: Rotorwelle
- 80: Rotorblatt
- 99: Rotorlagerung
- 100: Triebstranganordnung
- 101: erstes Modul
- 102: zweites Modul
- 103: Stirnradstufe
- 104: erste Planetenradstufe
- 105: zweite Planetenradstufe
- 106: erstes Gehäuse
- 107: zweites Gehäuse
- 108: Rotorlagergehäuse
- 109: Rotor
- 110: Hohlrad
- 111: Abstand
- 112: Entkopplungselement
- 113: Sonnenwelle
- 114: Steckverbindung
- 115: Planetenträger der zweiten Planetenradstufe
- 116: Lager
- 119: Dichtung
- 120: Verbindungsvorrichtung
- 121: Dämpfungselement
- 122: Flansch
- 123, 124, 125, 126: Lager
- 127: Flanschverbindung
- 128: Planetenträger der ersten Planetenradstufe
- 129: Planet der ersten Planetenradstufe
- 130: Sonnenrad
- 131: Verzahnung
- 132: Steckverzahnung
- 133: Gleitlager
- 134: axiale Sicherung
- 135: Planetenlager
- 136: Hohlrad der zweiten Planetenradstufe
- 137: Lager der zweiten Platenradstufe
- 138: Maschinenträger
- 139, 140: Achse
- 141, 142: Wälzlager
- 143: Exzenterscheibe
- 144: Planet der zweite Planetenradstufe
- 150: Gehäuse der ersten Planetenradstufe

## Patentansprüche

1. Triebstranganordnung für eine Windenergieanlage, aufweisend:
- eine erste Planetenradstufe (104) und eine zweite Planetenradstufe (105), **gekennzeichnet durch** eine Stirnradstufe (103) zur Kopplung mit einem Generator, wobei
- ein erstes Modul (101) der Triebstranganordnung (100) die erste Planetenradstufe (104) in einem ersten Gehäuse (106) aufweist,
- ein zweites Modul (102) der Triebstranganordnung (100) die zweite Planetenradstufe (105) und die Stirnradstufe (103) in einem zweiten Gehäuse (107) aufweist, und
- das erste Gehäuse (106) und das zweite Gehäuse (107) jeweils als zueinander eigenständige Gehäuse ausgebildet sind.

2. Triebstranganordnung nach Anspruch 1, aufweisend:
- eine Rotorlagerung 99 zum Lagern eines Rotors (109) der Windenergieanlage umfassend ein Rotorlagergehäuse (108), wobei
- ein Hohlrad (110) der ersten Planetenradstufe (104) mit dem Rotorlagergehäuse (108) starr verbunden ist.

3. Triebstranganordnung nach Anspruch 1 oder 2, bei der das erste Gehäuse (106) durch das Rotorlagergehäuse (108), das Hohlrad (110) und das Gehäuse (150) der ersten Planetenradstufe (104) gebildet ist.

4. Triebstranganordnung nach einem der Ansprüche 1 bis 3, bei der das erste Gehäuse (106) und das zweite Gehäuse (107) jeweils separat zueinander abgedichtet sind.

5. Triebstranganordnung nach einem der Ansprüche 1 bis 4, bei der das erste Gehäuse (106) und das zweite Gehäuse (107) einen Abstand (111) voneinander aufweisen.

6. Triebstranganordnung nach einem der Ansprüche 1 bis 5, aufweisend:
- ein Entkopplungselement (112), das zwischen dem ersten (106) und dem zweiten (107) Gehäuse angeordnet ist, um das zweite Modul (102) von dem ersten Modul (101) akustisch zu entkoppeln.

7. Triebstranganordnung nach Anspruch 6, bei der das Entkopplungselement (112) elastisch ausgebildet ist für eine Relativbewegung zwischen dem ersten Modul (101) und dem zweiten Modul (102).

8. Triebstranganordnung nach einem der Ansprüche 1 bis 7, bei der das erste Modul (101) und das zweite Modul (102) mittels einer Sonnenwelle (113) miteinander gekoppelt sind, und die Sonnenwelle (113) dazu ausgebildet ist, ein Drehmoment zwischen der ersten Planetenradstufe (104) und der zweiten Planetenradstufe (105) zu übertragen.

9. Triebstranganordnung nach Anspruch 8, bei der die Sonnenwelle (113) mittels einer Steckverbindung (114) mit einem Planetenträger (115) der zweiten Planetenradstufe (105) verbunden ist, sodass die Sonnenwelle (113) und der Planetenträger (115) relativ zueinander beweglich sind.

10. Triebstranganordnung nach Anspruch 8, bei der die Sonnenwelle (113) starr mit einem Planetenträger (115) der zweiten Planetenradstufe (105) verbunden ist, sodass die Sonnenwelle (113) und der Planetenträger (115) relativ zueinander fixiert sind.

11. Triebstranganordnung nach einem der Ansprüche 7 bis 10, bei der die Sonnenwelle (113) mittels eines Lagers (116) in dem ersten Gehäuse (106) abgestützt ist.

12. Triebstranganordnung nach Anspruch 11, bei der das Lager (116) zwei Kegelrollenlager aufweist.

13. Triebstranganordnung nach Anspruch 10 und 11 oder 12, bei der der Planetenträger (115) der zweiten Planetenradstufe (105) mittels der Sonnenwelle (113) an dem ersten Gehäuse (106) gelagert ist.

14. Triebstranganordnung nach einem der Ansprüche 7 bis 13, aufweisend eine flexible Dichtung (119) zwischen dem ersten Gehäuse (106) und dem zweiten Gehäuse (107), die die Sonnenwelle (113) umgibt.

15. Triebstranganordnung nach einem der Ansprüche 1 bis 14, bei der das zweite Gehäuse (107) mittels einer Verbindungsvorrichtung (120) an einem Maschinenträger der Windenergieanlage befestigbar ist, wobei die Verbindungsvorrichtung (120) ein elastisches Dämpfungselement (121) aufweist.

## Claims

1. A drivetrain assembly for a wind turbine, including:
- a first planetary wheel stage (104) and a second planetary wheel stage (105), **characterized by** a spur wheel stage (103) for coupling with a generator,
wherein
- a first module (101) of the drivetrain assembly (100) includes the first planetary wheel stage (104) in a first housing (106),
- a second module (102) of the drivetrain assembly (100) includes the second planetary wheel stage (105) and the spur wheel stage (103) in a second housing (107), and
- the first housing (106) and the second housing (107) each are formed as housings independent from one another.

2. The drivetrain assembly according to claim 1, including:
- a rotor support (99) for mounting a rotor (109) of the wind turbine, comprising a rotor mounting housing (108),
wherein
- an internal gear wheel (110) of the first planetary wheel stage (104) is rigidly connected with the rotor mounting housing (108).

3. The drivetrain assembly according to claim 1 or 2, in which the first housing (106) is formed by the rotor mounting housing (108), the internal gear wheel (110) and the housing (150) of the first planetary wheel stage (104).

4. The drivetrain assembly according to any one of claims 1 to 3, in which the first housing (106) and the second housing (107) each are sealed separately from one another.

5. The drivetrain assembly according to any one of claims 1 to 4, in which the first housing (106) and the second housing (107) have a distance (111) from one another.

6. The drivetrain assembly according to any one of claims 1 to 5, including:
- a decoupling element (112) arranged between the first housing (106) and the second housing (107) so as to decouple acoustically the second module (102) from the first module (101) .

7. The drivetrain assembly according to claim 6, in which the decoupling element (112) is formed to be elastic for a relative movement between the first module (101) and the second module (102).

8. The drivetrain assembly according to any one of claims 1 to 7, in which the first module (101) and the second module (102) are coupled with one another by means of a sun shaft (113), and the sun shaft (113) is formed to transmit a torque between the first planetary wheel stage (104) and the second planetary wheel stage (105).

9. The drivetrain assembly according to claim 8, in which the sun shaft (113) is connected with a planetary carrier (115) of the second planetary wheel stage (105) via a plug connection (114) so that the sun shaft (113) and the planetary carrier (115) are movable relative to one another.

10. The drivetrain assembly according to claim 8, in which the sun shaft (113) is rigidly connected with a planetary carrier (115) of the second planetary wheel stage (105) so that the sun shaft (113) and the planetary carrier (115) are fixed relative to one another.

11. The drivetrain assembly according to any one of claims 7 to 10, in which the sun shaft (113) is supported in the first housing (106) by means of a bearing (116).

12. The drivetrain assembly according to claim 11, in which the bearing (116) comprises two tapered roller bearings.

13. The drivetrain assembly according to claims 10 and 11 or 12, in which the planetary carrier (115) of the second planetary wheel stage (105) is supported at the first housing (106) by means of the sun shaft (113).

14. The drivetrain assembly according to any one of claims 7 to 13, including a flexible seal (119) between the first housing (106) and the second housing (107), which surrounds the sun shaft (113).

15. The drivetrain assembly according to any one of claims 1 to 14, in which the second housing (107) is attachable at a machine frame of the wind turbine by means of a connecting device (120), wherein the connecting device (120) includes an elastic damping element (121).

## Revendications

1. Dispositif de chaîne cinématique pour une éolienne, présentant :
- un premier étage d'engrenage planétaire (104) et un deuxième étage d'engrenage planétaire (105), **caractérisés par** un étage d'engrenage droit (103) pour le couplage à une génératrice, sachant que
- un premier module (101) du dispositif de chaîne cinématique (100) présente le premier étage d'engrenage planétaire (104) dans un premier carter (106),
- un deuxième module (102) du dispositif de chaîne cinématique (100) présente le deuxième étage d'engrenage planétaire (105) et l'étage d'engrenage droit (103) dans un deuxième carter (107), et
- le premier carter (106) et le deuxième carter (107) sont constitués respectivement comme carters indépendants l'un par rapport à l'autre.

2. Dispositif de chaîne cinématique selon la revendication 1, présentant :
- un logement de rotor (99) destiné à loger un rotor (109) de l'éolienne, comprenant un carter de palier de rotor (108),
sachant que
- une couronne (110) du premier étage d'engrenage planétaire (104) est reliée de manière solidaire au carter de palier de rotor (108).

3. Dispositif de chaîne cinématique selon la revendication 1 ou 2, dans lequel le premier carter (106) est formé par le carter de palier de rotor (108), la couronne (110) et le carter (150) du premier étage d'engrenage planétaire (104).

4. Dispositif de chaîne cinématique selon l'une des revendications 1 à 3, dans lequel le premier carter (106) et le deuxième carter (107) sont étanchéifiés de manière respectivement séparée l'un par rapport à l'autre.

5. Dispositif de chaîne cinématique selon l'une des revendications 1 à 4, dans lequel le premier carter (106) et le deuxième carter (107) présentent un écart (111) l'un par rapport à l'autre.

6. Dispositif de chaîne cinématique selon l'une des revendications 1 à 5, présentant :
- un élément de découplage (112) qui est disposé entre le premier (106) et le deuxième (107) carter pour découpler acoustiquement le deuxième module (102) du premier module (101) .

7. Dispositif de chaîne cinématique selon la revendication 6, dans lequel l'élément de découplage (112) est constitué de manière élastique pour un mouvement relatif entre le premier module (101) et le deuxième module (102).

8. Dispositif de chaîne cinématique selon l'une des revendications 1 à 7, dans lequel le premier module (101) et le deuxième module (102) sont couplés l'un à l'autre moyennant un arbre solaire (113), et l'arbre solaire (113) est constitué pour transmettre un couple de rotation entre le premier étage d'engrenage planétaire (104) et le deuxième étage d'engrenage planétaire (105).

9. Dispositif de chaîne cinématique selon la revendication 8, dans lequel l'arbre solaire (113) est relié à un support planétaire (115) du deuxième étage d'engrenage planétaire (105) moyennant une liaison par enfichage (114) de telle sorte que l'arbre solaire (113) et le support planétaire (115) soient mobiles l'un par rapport à l'autre.

10. Dispositif de chaîne cinématique selon la revendication 8, dans lequel l'arbre solaire (113) est relié de manière solidaire au support planétaire (115) du deuxième étage d'engrenage planétaire (105) de telle sorte que l'arbre solaire (113) et le support planétaire (115) soient fixés l'un par rapport à l'autre.

11. Dispositif de chaîne cinématique selon l'une des revendications 7 à 10, dans lequel l'arbre solaire (113) est soutenu dans le premier carter (106) moyennant un palier (116) .

12. Dispositif de chaîne cinématique selon la revendication 11, dans lequel le palier (116) présente deux paliers à rouleaux coniques.

13. Dispositif de chaîne cinématique selon les revendications 10 et 11 ou 12, dans lequel le support planétaire (115) du deuxième étage d'engrenage planétaire (105) est logé au niveau du premier carter (106) moyennant l'arbre solaire (113).

14. Dispositif de chaîne cinématique selon l'une des revendications 7 à 13, présentant un joint d'étanchéité flexible (119) entre le premier carter (106) et le deuxième carter (107), lequel entoure l'arbre solaire (113).

15. Dispositif de chaîne cinématique selon l'une des revendications 1 à 14, dans lequel le deuxième carter (107) est apte à être fixé à un support de machine de l'éolienne moyennant un dispositif de liaison (120), sachant que le dispositif de liaison (120) présente un élément d'amortissement élastique (121).
